# EUROPÄISCHE PATENTSCHRIFT

(11) **EP 3 008 426 B1**
(45) Veröffentlichungstag und Bekanntmachung des Hinweises auf die Patenterteilung: **30.08.2017**
(21) Anmeldenummer: 14735860.0
(22) Anmeldetag: 05.07.2014
(51) Int. Cl.: G01D 18/00, G01D 5/14

(54) **SENSORSYSTEM UND VERFAHREN ZUR AUTOMATISIERTEN FESTLEGUNG EINES SCHALTPUNKTS FÜR EIN SENSORSYSTEM**
SENSOR SYSTEM AND METHOD FOR AUTOMATICALLY DETERMINING A SWITCHING POINT FOR A SENSOR SYSTEM
SYSTÈME DE CAPTEURS ET PROCÉDÉ POUR DÉFINIR AUTOMATIQUEMENT UN POINT DE COMMUTATION POUR UN SYSTÈME DE CAPTEURS

(30) Priorität: 12.07.2013 DE 102013011668
(43) Veröffentlichungstag der Anmeldung: 20.04.2016
(73) Patentinhaber: Festo AG & Co. KG, 73734 Esslingen (DE)
(72) Erfinder: HEINECK, Torsten, 73770 Denkendorf (DE); RIEDER, Wolfgang, 73732 Esslingen (DE)
(74) Vertreter: Patentanwälte Magenbauer & Kollegen Partnerschaft mbB
(86) Internationale Anmeldenummer: PCT/EP2014/001851
(87) Internationale Veröffentlichungsnummer: WO 2015/003791

(56) Entgegenhaltungen:
- WO-A1-99/42789
- DE-A1-102007 029 488

## Beschreibung

Die Erfindung betrifft ein Sensorsystem zur Ermittlung einer Position eines Messobjekts relativ zu einem Sensor, mit einem Sensor zur Bereitstellung eines Messwerts, das von einem Abstand zwischen Sensor und einem Messobjekt abhängt sowie mit einer Auswerteeinrichtung zur Auswertung des Messwerts und zur Bereitstellung eines Auswertungsergebnisses. Ferner betrifft die Erfindung ein Verfahren zur automatisierten Festlegung eines Schaltpunkts für ein Sensorsystem.

Aus der DE 10 2007 029 488 A1 ist ein Verfahren zur Schaltpunkteinstellung eines Sensors bekannt, wobei es sich bei dem Sensor insbesondere um einen magnetischen oder induktiven Sensor handeln kann, der vorzugsweise zur Positionsbestimmung der Endlagen eines Kolbens eingesetzt wird. Bei dem bekannten Verfahren wird eine Kolbenposition wiederkehrend von dem Sensor erfasst, erfasste Messwerte werden gespeichert und es wird eine Häufigkeitsauswertung für die gespeicherten Messwerte vorgenommen. Nach einer vorbestimmten Anzahl von Hubbewegungen des Kolbens wird ein Schaltpunkt derjenigen Kolbenposition zugeordnet, an der gleiche Messwerte gehäuft auftreten, wobei ein Schaltpunkt nur dann zugeordnet wird, wenn eine bestimmte Mindestanzahl an gleichen Messwerten vorliegt.

Die Aufgabe der Erfindung besteht darin, ein Sensorsystem und ein Verfahren zur automatisierten Festlegung eines Schaltpunkts für ein Sensorsystem anzugeben, die gegenüber dem Stand der Technik eine vereinfachte Aufbau- bzw. Verfahrensweise ermöglichen.

Diese Aufgabe wird für ein Sensorsystem der eingangs genannten Art mit den Merkmalen des Anspruchs 1 gelöst.

Hierbei ist vorgesehen, dass die Auswerteeinrichtung eine Vergleichseinrichtung und ein Zeitglied umfasst, dass die Vergleichseinrichtung für einen Vergleich eines gespeicherten Messwerts mit einem aktuell ermittelten Messwert ausgebildet ist, dass die Vergleichseinrichtung für eine Bereitstellung eines Steuersignals an das Zeitglied ausgebildet ist, wenn ein Ergebnis des Vergleichs einem vorgebbaren Kriterium genügt, dass das Zeitglied derart ausgebildet ist, dass bei der Bereitstellung des Steuersignals ein Zeitmessvorgang weitergeführt wird und dass bei einem Ausbleiben des Steuersignals der Zeitmessvorgang erneut gestartet wird, dass das Zeitglied derart ausgebildet ist, dass bei Erreichen einer vorgebbaren Zeitspanne ein Triggersignal vom Zeitglied ausgegeben wird und dass die Auswerteeinrichtung eine Speichereinrichtung umfasst, die zur Speicherung des aktuellen Messwerts bei Eintreffen des Triggersignals eingerichtet ist.

Die Auswerteeinrichtung ist dazu vorgesehen, mit minimalem Datenverarbeitungsaufwand ein eigenständiges Festlegen wenigstens eines Schaltpunkts durch das Sensorsystem zu ermöglichen. Von dem Sensorsystem soll an dem wenigstens einen Schaltpunkt ein Sensorsignal in Form eines konkreten Positionswerts und/oder ein Schaltsignal, insbesondere ein digitales Schaltsignal, ausgegeben werden, das dazu dient, einer mit dem Sensorsystem gekoppelten, übergeordneten Steuereinrichtung wie beispielsweise einer speicherprogrammierbaren Steuerung (SPS) die Information zu übermitteln, dass das Messobjekt eine vorher ermittelte und gespeicherte Arbeitsposition erreicht hat. Typischerweise handelt es sich bei der Arbeitsposition des Messobjekts, die mit einem Schaltpunkt verknüpft wird, um eine Endlage, die ein rotatorischer oder translatorischer Aktor längs einer Bewegungsbahn einnimmt. Es kann sich bei der Position des Messobjekts ergänzend oder alternativ auch um eine Zwischenstellung zwischen zwei Endstellungen handeln. Eine Arbeitsposition wird dadurch bestimmt, dass das Messobjekt vorzugsweise eine gewisse Zeitspanne an dem jeweiligen Ort verbleibt.

Abweichend von dem Verfahren zur Schaltpunkteinstellung eines Sensors unter Verwendung einer Häufigkeitsauswertung, wie es aus dem Stand der Technik bekannt ist, erfolgt bei dem erfindungsgemäßen Sensorsystem lediglich ein zeitlich begrenzter Vergleich eines aktuell ermittelten Messwerts mit einem, vorzugsweise einzigen, gespeicherten Messwert. Die hierzu vorgesehene Zeitspanne ist im Zeitglied gespeichert, wobei das Zeitglied einen Zeitmessvorgang so lange weiterführt, bis entweder die vorgegebene Zeitspanne erreicht wurde oder bis das Steuersignal von der Vergleichseinrichtung ausbleibt. Bei einem Ausbleiben des Steuersignals erfolgt eine Rücksetzung des Zeitglieds, so dass der Zeitmessvorgang wieder von Neuem beginnt. Das Steuersignal wird von der Vergleichseinrichtung bereitgestellt, sofern ein gespeicherter Messwert mit einem aktuell ermittelten Messwert übereinstimmt. Dabei ist vorgesehen, dass nach Durchführung eines Vergleichs zwischen dem gespeicherten Messwert und dem aktuell ermittelten Messwert zur Vorbereitung des nächsten Vergleichszyklus stets der gespeicherte Messwert durch den aktuellen Messwert ersetzt wird. Dabei wird der bislang gespeicherte Messwert verworfen, so dass hierfür weder ein Speicherplatz noch eine Speicherplatzverwaltung notwendig sind. Bei dem,Kriterium, das zur Beurteilung des Vergleichsergebnisses herangezogen wird, kann es sich beispielsweise um eine maximal zulässige Differenz zwischen dem gespeicherten und dem aktuellen Messwert handeln. Somit sind für eine Entscheidung, ob das Steuersignal weiterhin an das Zeitglied bereitgestellt werden soll oder ob das Zeitglied durch ein Ausbleiben des Steuersignals zurückgesetzt werden soll, vorzugsweise lediglich eine Speicherzelle für einen vorherigen Wert des Messwerts, eine erste Vergleichsoperation zur Verarbeitung der beiden Messwerte sowie eine zweite Vergleichsoperation zum Abgleich des Ergebnisses der ersten Vergleichsoperation mit einem vorgebbaren Kriterium erforderlich. In dem Zeitglied findet zumindest in regelmäßigen Abständen eine Abfrage statt, ob das Steuersignal von der Vergleichseinrichtung bereitgestellt wird. Sofern dies der Fall ist, wird im Zeitglied eine Zeitmessung so lange fortgesetzt, bis eine vorgebbare Zeitspanne erreicht ist. Bei Erreichen der vorgebbaren Zeitspanne gibt das Zeitglied ein Triggersignal aus, das innerhalb der Auswerteeinrichtung dazu führt, dass der aktuelle Messwert gespeichert wird. Dieser Messwert dient nunmehr als Schaltpunkt für das Sensorsystem, so dass bei neuerlichem Ermitteln dieses Messwerts ein Positionssignal an eine übergeordnete Steuereinrichtung wie beispielsweise eine speicherprogrammierbare Steuerung ausgegeben werden kann, um anzuzeigen, dass das Messobjekt in eine vorgegebene, insbesondere in eine mechanisch vorgegebene, Arbeitsposition gelangt ist.

Praktisch gesehen kann immer dann ein Schaltpunkt vom Sensorsystem festgelegt werden, wenn die Geschwindigkeit des Messobjekts verschwindet oder Null ist und die vom Sensorsystem ermittelten Messwerte zumindest über einen vorgegebenen Zeitraum im Wesentlichen konstant sind.

Bei dem Messwert handelt es sich vorzugsweise um ein elektrisches Spannungs- oder Stromsignal, das seinerseits von einem Messergebnis eines Sensors oder von Messergebnissen mehrerer Sensoren bestimmt wird. Exemplarisch kann vorgesehen sein, dass das Sensorsystem einen zweiachsigen Hall-Sensor umfasst, der eine Radialfeldkomponente und eine Axialfeldkomponente eines Magnetfelds, insbesondere eines Permanentmagnetfelds, des Messobjekts erfassen kann und die beiden Magnetfeldkomponenten in vorgebbarer Weise miteinander verrechnet, so dass der gewünschte Messwert ausgegeben werden kann.

Vorteilhafte Weiterbildungen der Erfindung sind in den Unteransprüchen angegeben.

Zweckmäßig ist es, wenn die Vergleichseinrichtung für die Speicherung genau eines, insbesondere eines zuletzt ermittelten, Messwerts eingerichtet ist. Hierdurch kann die Vergleichseinrichtung einen sehr einfachen Aufbau aufweisen, da sie lediglich eine Speicherzelle für den Messwert benötigt und da keine aufwendige Verwaltung einer Vielzahl von Speicherzellen erforderlich ist. Vorzugsweise findet eine Ermittlung von Messwerten mit einer konstanten Taktfrequenz statt, so dass Messwerte sequentiell ermittelt und verarbeitet werden können. Vorzugsweise findet in der Vergleichseinrichtung ein Vergleich des jeweils aktuellen Messwerts mit einem unmittelbar vorher, also zuletzt eingetroffenen Messwert, statt.

Vorteilhaft ist es, wenn die Speichereinrichtung zur Speicherung mehrerer Messwerte unterschiedlicher Arbeitspositionen ausgebildet ist. Somit können für das Messobjekt längs einer Bewegungsbahn, also beispielsweise einer Bewegungsachse bei einem Linearantrieb oder einer Kreisbahn bei einem Drehantrieb, mehrere Schaltpunkte für mehrere Arbeitspostionen durch das Sensorsystem festgelegt werden.

Bei einer Weiterbildung der Erfindung ist vorgesehen, dass die Auswerteeinrichtung zur Ausgabe eines Positionssignals ausgebildet ist, wenn ein aktuell ermittelter Messwert mit einem in der Speichereinrichtung gespeicherten Messwert zumindest nahezu übereinstimmt. Das Positionssignal kann ausgegeben werden, wenn das Messobjekt die jeweilige Arbeitsposition passiert und/oder wenn das Messobjekt an der jeweiligen Arbeitsposition eine vorgebbare Mindestdauer verweilt. Vorzugsweise beinhaltet das Positionssignal eine Information über die jeweils vom Messobjekt erreichte Position oder es wird unmittelbar der an der jeweiligen Position vorliegende Messwert als Positionssignal ausgegeben. Somit können in einfacher Weise unterschiedliche Positionssignale ausgegeben werden. Exemplarisch kann vorgesehen werden, dass das Sensorsystem kein Signal ausgibt, solange der aktuelle Messwert mit keinem der gespeicherten Messwerte übereinstimmt. Sobald der aktuelle Messwert mit dem gespeicherten Messwert zumindest nahezu übereinstimmt, kann der jeweils aktuelle Messwert einmal oder wiederkehrend oder dauerhaft ausgegeben werden. Für eine Entscheidung darüber, ob der aktuelle Messwert zumindest nahezu mit dem gespeicherten Messwert übereinstimmt, kann ein Vergleichskriterium angesetzt werden. Beispielsweise kann das Vergleichskriterium als maximal zulässige Differenz zwischen den beiden Messwerten definiert sein.

In weiterer Ausgestaltung der Erfindung ist die Auswerteeinrichtung derart eingerichtet, dass eine Ausgabe des Positionssignals erst vorgenommen wird, wenn ein in der Speichereinrichtung gespeicherter Messwert zumindest einmal durch Vorliegen eines Triggersignals bei zumindest nahezu gleichem Messwert bestätigt wurde. Dadurch wird erreicht, dass eine bestimmte Position längs der Bewegungsbahn des Messobjekts zumindest ein zweites Mal derart angefahren wird, dass es zur Ausgabe eines Triggersignals durch das Zeitglied kommt, bevor das Positionssignal ausgegeben wird. Hierdurch wird vermieden, dass eine Speicherung eines Messwerts an einer Position des Messobjekts längs des Bewegungswegs erfolgt, die das Messobjekt nur einmalig, beispielsweise aufgrund äußerer Umstände wie einer zeitweiligen außerplanmäßigen Blockierung der Bewegung des Messobjekts, angesteuert hat. Zum Vergleich der beiden Messwerte kann ein Vergleichskriterium, insbesondere gemäß der vorstehend genannten Art, vorgesehen werden.

Die Aufgabe der Erfindung wird gemäß einem zweiten Aspekt durch ein Verfahren zur automatisierten Festlegung eines Schaltpunkts für ein Sensorsystem, das ein Messwert in Abhängigkeit von einem Abstand zwischen einem Sensor und einem Messobjekt ausgibt, mit den wiederkehrenden Schritten gelöst: Ermitteln eines ersten Messwerts zu einem ersten Zeitpunkt und Speichern des ersten Messwerts in einer Vergleichseinrichtung, Ermitteln eines zweiten Messwerts zu einem zweiten Zeitpunkt und Vergleichen des zweiten Messwerts mit dem ersten Messwert, Bereitstellen eines Steuersignals an ein Zeitglied nur für den Fall, dass ein Ergebnis des Vergleichs der beiden Messwerte einem vorgebbaren Kriterium genügt, Weiterführen eines Zeitmessvorgangs durch das Zeitglied bei Bereitstellung des Steuersignals, Neustart des Zeitmessvorgangs durch das Zeitglied bei Ausbleiben des Steuersignals, Ausgeben eines Triggersignals vom Zeitglied an die Speichereinrichtung bei Erreichen einer vorgebbaren Zeitspanne, Speichern des aktuellen Messwerts in einer Speichereinrichtung der Auswerteeinrichtung bei Eintreffen des Triggersignals.

In Ausgestaltung des Verfahrens ist vorgesehen, dass für den Vergleich des ersten Messwerts mit dem zweiten Messwert eine Zwischenspeicherung des ersten Messwerts, vorzugsweise eine ausschließliche Zwischenspeicherung des ersten Messwerts, vorgenommen wird.

In weiterer Ausgestaltung des Verfahrens ist vorgesehen, dass die Auswerteeinrichtung ein Positionssignal ausgibt, wenn ein aktuell ermittelter Messwert mit einem in der Speichereinrichtung gespeicherten Messwert zumindest nahezu übereinstimmt.

In weiterer Ausgestaltung des Verfahrens ist vorgesehen, dass eine Ausgabe des Positionssignals erst vorgenommen wird, wenn ein in der Speichereinrichtung gespeicherter Messwert zumindest einmal durch Vorliegen eines Triggersignals bei gleichem Messwert bestätigt wurde.

In weiterer Ausgestaltung des Verfahrens ist vorgesehen, dass ein Erfassungsbereich für den Messwert vorgegeben wird, in dem das vorgebbare Kriterium erfüllt werden kann, wobei eine Neubestimmung eines Schaltpunkts nur innerhalb des Erfassungsbereichs erfolgt. Dabei ist der Erfassungsbereich derjenige Abschnitt der Bewegungsbahn, in dem das Sensorsystem ein zuverlässiges Messsignal ermitteln kann. Nur in diesem Bereich sollen eine Festlegung einer Arbeitsposition und eine Ausgabe eines Positionssignals möglich sein.

Eine vorteilhafte Ausführungsform der Erfindung ist in der Zeichnung dargestellt. Hierbei zeigt:
- Figur 1: eine schematische Darstellung eines Automatisierungssystems mit einem erfindungsgemäßen Sensorsystem,
- Figur 2: eine schematische Darstellung des erfindungsgemäßen Sensorsystems,
- Figur 3: eine erste Wertetabelle für ein Verfahren zur automatisierten Festlegung eines Schaltpunkts für ein Sensorsystem,
- Figur 4: eine zweite Wertetabelle für das Verfahren zur automatisierten Festlegung eines Schaltpunkts,
- Figur 5: eine dritte Wertetabelle für das Verfahren zur automatisierten Festlegung eines Schaltpunkts,
- Figur 6: eine vierte Wertetabelle für das Verfahren zur automatisierten Festlegung eines Schaltpunkts und
- Figur 7: eine schematische Schaltungsdarstellung einer Analogschaltung zur Auswertung und Verarbeitung von Messwerten.

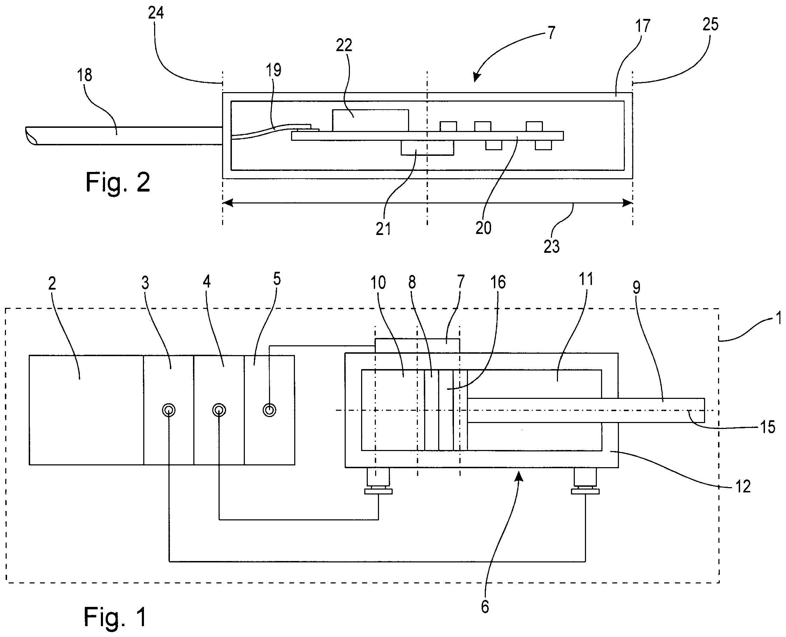

In der Figur 1 ist ein Automatisierungssystem 1 dargestellt, das exemplarisch eine Steuereinheit 2, zwei mit der Steuereinheit 2 verbundene Ventileinheiten 3, 4, eine Eingabeeinheit 5 sowie einen beispielhaft als Pneumatikzylinder ausgebildeten Aktor 6 umfasst. Am Aktor 6 ist ein Sensorsystem 7 angeordnet, das zur Ermittlung einer Position eines Messobjekts, vorliegend eines Kolbens 8, relativ zum Sensorsystem 7 ausgebildet ist.

Das Automatisierungssystem 1 kann beispielhaft zur zeitweiligen Klemmung eines nicht dargestellten Werkstücks eingesetzt werden. Hierzu kann der Kolben 8 mit der daran angebrachten Kolbenstange 9 durch gezielte Fluid-Druckbeaufschlagung wenigstens eines Arbeitsraums 10, 11 eines Zylindergehäuses 12 des Aktors 6 zwischen verschiedenen Arbeitspostionen längs eines exemplarisch als Bewegungsachse 15 ausgebildeten Bewegungswegs verschoben werden. Für eine Unterscheidung zwischen einem geklemmten Zustand des Werkstücks und einem freigegebenen Zustand des Werkstücks ist das Sensorsystem 7 vorgesehen, das zur Bestimmung der relativen Lage des Kolbens 8 vorgesehen ist. Exemplarisch ist der Kolben 8 mit einem Ringmagneten 16 ausgestattet, der ein nicht eingezeichnetes Magnetfeld mit axialen und radialen Magnetfeldkomponenten bereitstellt. Das Sensorsystem 7 ist zur Erfassung wenigstens einer dieser Magnetfeldkomponenten ausgebildet und soll dazu eingesetzt werden, immer dann ein Positionssignal an die Eingabeeinheit 5 auszugeben, wenn der Kolben 8 genau eine oder wenigstens eine Arbeitsposition längs der Bewegungsachse 15 erreicht. Dabei ist das Sensorsystem 7 derart ausgebildet, dass es die Arbeitspositionen längs der Bewegungsachse 15 selber ermitteln kann und nur dann ein Positionssignal ausgibt, wenn der Kolben 8 die jeweils ermittelte Arbeitsposition erreicht. Dabei soll eine Arbeitsposition dadurch gekennzeichnet sein, dass der Kolben 8 an einem Ort längs der Bewegungsachse 15 über einen gewissen, vorgebbaren Zeitraum ruht, beispielsweise in einer Klemmstellung zur Festlegung des Werkstücks.

Das Sensorsystem 7 umfasst gemäß der exemplarischen Darstellung der Figur 2 ein geschlossenes Sensorgehäuse 17, beispielsweise aus zwei stoffschlüssig miteinander verbundenen Gehäusehalbschalen. Das Sensorgehäuse 17 wird beispielhaft an einem stirnseitigen Endbereich von einem Anschlusskabel 18 durchsetzt, dessen nicht näher bezeichneter Außenmantel mit dem Sensorgehäuse 17 stoffschlüssig verbunden ist und dessen Anschlusslitzen 19 in das Sensorgehäuse 17 hineinragen und eine elektrische Verbindung mit der Eingabeeinheit 5 ermöglichen. In dem Sensorgehäuse 17 ist eine als mehrlagige gedruckte Schaltung ausgebildete Platine 20 aufgenommen, die mit mehreren elektrischen und elektronischen Bauteilen bestückt ist, die eine elektronische Schaltung bilden.

Als wesentliche elektronische Bauteile dieser Schaltung sind exemplarisch ein Magnetfeldsensor 21 und ein Mikrocontroller 22 vorgesehen, die mittels der Platine 20 elektrisch miteinander verbunden sind. Beispielhaft ist der Magnetfeldsensor als Hall-Sensor oder MR-Sensor (magnetoresistiver Sensor), insbesondere als 2-achsiger Hall-Sensor, ausgebildet. Der Magnetfeldsensor 21 liefert ein Magnetfeldsignal an den Mikrocontroller 22, das in Abhängigkeit zu wenigstens einer Magnetfeldkomponente des Ringmagneten 16 steht. Vorzugsweise liefert der Magnetfeldsensor 21 zwei Magnetfeldsignale, die die radiale und axiale Magnetfeldkomponente des Ringmagnets 16 repräsentieren. Der Mikrocontroller 22 kann derart ausgebildet und/oder programmiert sein, dass er die beiden Magnetfeldsignale zu einem einzigen Messwert vorverarbeitet und diesen Messwert für die nachstehend näher beschriebene Weiterverarbeitung nutzt. Alternativ kann diese Signalverarbeitung auch durch den Magnetfeldsensor 21 erfolgen.

Erfindungsgemäß soll das Sensorsystem 7 dazu ausgebildet sein, wenigstens eine Arbeitsposition selbsttätig zu bestimmen und nach Durchführung dieser Bestimmung immer dann ein Positionssignal an die Eingabeeinheit 5 auszugeben, wenn der als Messobjekt dienende Kolben 8 die wenigstens eine, bestimmte Arbeitsposition einnimmt.

Die Vorteile einer selbsttätigen Bestimmung der wenigstens einen Arbeitsposition durch das Sensorsystem 7 liegen in der Möglichkeit zur Anbringung des Sensorsystems 7 am Aktor 6 vor der endgültigen Montage des Aktors 6 in das Automatisierungssystem 1 sowie in der Möglichkeit zur Nachführung der wenigstens einen Arbeitsposition für den Fall einer mechanisch bedingten Änderung dieser Arbeitsposition im Laufe der Zeit, beispielsweise durch Setzvorgänge im Aktor 6 und/oder an anderen, nicht dargestellten Komponenten des Automatisierungssystems 1, die mit dem Aktor 6 in mechanischer Wechselwirkung stehen.

Sensorsysteme, die nicht für eine selbsttätige Bestimmung der wenigstens einen Schaltposition ausgebildet sind, können zwar bereits vor der endgültigen Montage des Aktors am Aktor angebracht werden, müssen jedoch nach der Montage des Aktors in das Automatisierungssystem wahlweise durch mechanisches Verschieben und nachfolgendes Festlegen justiert werden oder müssen mit Hilfe eines separaten Programmiergeräts oder einer Programmierfunktion einer übergeordneten Steuerung, beispielsweise einer speicherprogrammierbaren Steuerung, programmiert werden. Hierdurch entsteht zusätzlicher Aufwand bei der Einrichtung des Automatisierungssystems, der mit Hilfe des erfindungsgemäßen Sensorsystems vermieden werden kann. Ferner bietet das erfindungsgemäße Sensorsystem die Möglichkeit, die wenigstens eine Arbeitsposition während des Betriebs des Automatisierungssystems nachzuführen, also automatisch zu korrigieren. Exemplarisch kann vorgesehen sein, diese automatische Nachführung durch ein Sperrsignal an das Sensorsystem zu blockieren oder das Sensorsystem kann derart eingerichtet sein, dass eine Nachführung der wenigstens einen Arbeitsposition nur dann vorgenommen wird, wenn ein Freigabesignal an das Sensorsystem angelegt wird.

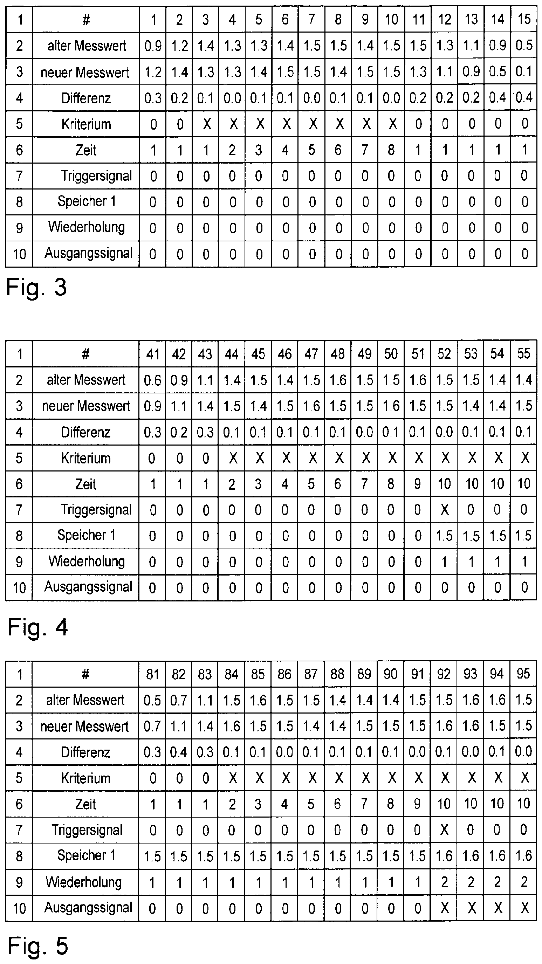

Nachstehend wird anhand des in den Figuren 1 und 2 dargestellten Sensorsystems 7 und der in den Figuren 3 bis 5 angeführten Wertetabellen eine exemplarische Bestimmung einer Arbeitsposition beschrieben. Bei dem in den Figuren 1 und 2 dargestellten Sensorsystem 7 wird davon ausgegangen, dass der Magnetfeldsensor 21 mittig im Sensorgehäuse 17 angeordnet ist und dass der Magnetfeldsensor 21 einen längs der Bewegungsachse 15 erstreckten, symmetrischen Erfassungsbereich 23 hat. Die Grenzen 24, 25 des Erfassungsbereichs 23 sind durch die gestrichelten Linien angedeutet und stimmen exemplarisch mit den Abmessungen des Sensorgehäuses 17 überein. Der Erfassungsbereich 23 ist derjenige Bereich längs der Bewegungsachse 15, in dem der Magnetfeldsensor 21 eine zuverlässige Messung der relevanten Magnetfeldkomponenten vornehmen kann und somit wenigstens ein eindeutiges und reproduzierbares Sensorsignal zur Verfügung stellen kann. Für eine Verwendung des Sensorsystems 7 an dem Aktor 6 wird das Sensorsystem 7 zunächst in derjenigen Position am Aktor 6 angebracht, in der mit einiger Wahrscheinlichkeit die wenigstens eine noch zu bestimmende Arbeitsposition liegt. Vorliegend soll mit Hilfe des Sensorsystems 7 die Klemmstellung des Aktors 6 ermittelt werden, in der die teilweise ausgefahrene Kolbenstange 9 ein nicht dargestelltes Werkstück festlegen kann. Die Position des Kolbens 8 und der Kolbenstange 9 in der Klemmstellung sind in der Figur 1 dargestellt.

Bei Erreichen dieser Arbeitsposition stellt sich ein eindeutig bestimmbares Magnetfeld des Ringmagneten 16 am Sensorsystem 7 ein. Vorzugsweise werden für eine eindeutige Bestimmung der Arbeitsposition des Kolbens 8 sowohl die radiale als auch die axiale Magnetfeldkomponente des Ringmagneten 16 ermittelt.

In den Figuren 3 bis 5 sind jeweils Wertetabellen für die folgenden Werte angegeben, die im Sensorsystem 7 bei der Bestimmung der Arbeitsposition eine Rolle spielen. Exemplarisch wird davon ausgegangen, dass nur der jeweils alte Messwert sowie der neue Messwert an wenigstens einer Arbeitsposition gespeichert werden.

In der ersten, mit "#" gekennzeichneten Zeile der Wertetabelle ist ein ausschließlich zu Übersichtszwecken dienender fortlaufender Zahlenwert angegeben, der exemplarisch einem Arbeitstakt des Sensorsystems 7 entspricht, der jedoch in keiner Weise im Sensorsystem 7 erhoben oder gespeichert wird. Es besteht keine Korrelation zwischen den Zahlenwerten in der Zeile 1 und den in den weiteren Zeilen eingetragenen Angaben. Die Messzyklen gemäß den Wertetabellen der Figuren 3 bis 5 sollen zu unterschiedlichen Zeitpunkten beginnen, was durch die Sprünge in der Nummerierung der Arbeitstakte zwischen den einzelnen Wertetabellen symbolisiert wird. Für die nachstehenden Ausführungen wird davon ausgegangen, dass der Kolben während der exemplarisch betrachteten Arbeitstakte 1 bis 95 mehrfach in die Arbeitsposition bewegt wird und wieder aus der Arbeitsposition wegbewegt wird, wodurch sich die Änderungen in den Messwerten erklären.

In der zweiten, mit "alter Messwert" gekennzeichneten Zeile der Wertetabelle ist ein gespeicherter Wert eines Messwerts angegeben, der jeweils auf eine Messung im vorhergehenden Arbeitstakt zurückgeht und der nach Durchführung eines Verarbeitungsschritts durch den jeweils aktuelle Messwert ersetzt wird.

In der dritten, mit "neuer Messwert" gekennzeichneten Zeile der Wertetabelle ist der Wert für den jeweils aktuellen Messwert angegeben.

In der vierten, mit "Differenz" gekennzeichneten Zeile der Wertetabelle ist das Ergebnis einer Vergleichsoperation angegeben, das in einer Vergleichseinrichtung der im Mikrocontroller 22 ausgebildeten Auswerteeinrichtung für die Messwerte bestimmt wird. Exemplarisch ist die Vergleichsoperation als Differenzbildung zwischen dem gespeicherten Messwert "alter Messwert" und dem aktuellen Messwert "neuer Messwert" vorgesehen, wobei das in der Wertetabelle angegebene Ergebnis der Betrag der Differenz der beiden Messwerte ist.

In der fünften, mit "Kriterium" gekennzeichneten Zeile der Wertetabelle ist eingetragen, ob der Wert aus der Rechenoperation einem vorgebbaren Kriterium genügt oder ob dies nicht der Fall ist. Sofern der Wert aus der Rechenoperation dem vorgebbaren Kriterium, exemplarisch einer Differenz kleiner/gleich 0.1, entspricht, wird von der Vergleichseinrichtung ein Steuersignal an ein Zeitglied ausgegeben, das in der elektronischen Schaltung des Sensorsystems 7 verwirklicht ist. Die Ausgabe des Steuersignals wird in der fünften Zeile der Wertetabelle durch ein "X" gekennzeichnet.

In der sechsten, mit "Zeit" gekennzeichneten Zeile der Wertetabelle ist eine fortlaufende Zeitdauer angegeben, die Werte von 1 bis maximal 10 annehmen kann. Sofern kein Steuersignal von der Vergleichseinrichtung an das Zeitglied bereitgestellt wird, verbleibt die Zeitdauer auf dem Ausgangswert 1 oder wird auf diesen Ausgangswert zurückgesetzt. Sofern innerhalb des jeweiligen Arbeitstakts des Sensorsystems 7 ein Steuersignal an das Zeitglied bereitgestellt wird, wird ein Zeitmessvorgang weitergeführt, so dass die Werte für die Zeitdauer mit jedem Arbeitstakt, in dem das Steuersignal weiter anliegt, jeweils schrittweise um 1 zunehmen.

In der siebten, mit "Triggersignal" gekennzeichneten Zeile wird ein "X" eingetragen, wenn das Zeitglied ein Triggersignal an die Auswerteeinrichtung ausgibt. Dies ist dann der Fall, wenn das Zeitglied den Zeitmessvorgang ununterbrochen über die vorgegebene Zeitspanne, exemplarisch 10 Arbeitstakte, durchgeführt hat. In der Figur 3 ist dies exemplarisch nicht der Fall, da in der dort dargestellten Zeitspanne vom ersten Arbeitstakt bis zum fünfzehnten Arbeitstakt stets vor Erreichen der vorgegebenen Zeitspanne eine Rücksetzung des Zeitglieds erfolgt ist.

In der Wertetabelle der Figur 4, die Messwerte umfasst, die rein exemplarisch den Arbeitstakten 41 bis 55 zugeordnet sind, wird im Arbeitstakt 52 der Zeitpunkt erreicht, zu dem das Steuersignal 10 mal in ununterbrochener Folge an das Zeitglied bereitgestellt wurde, so dass in diesem Arbeitstakt ein Triggersignal vom Zeitglied an die Auswerteeinrichtung bereitgestellt wird. Dieses Triggersignal führt dazu, dass der aktuelle Messwert in einer nicht dargestellten, von der Auswerteeinrichtung kontrollierten Speicherzelle des Mikrocontrollers 22 gespeichert wird. Der gespeicherte Messwert, der nach Durchlaufen des ersten erfolgreichen Messzyklus gespeichert wurde, ist in der mit der Bezeichnung "Speicher 1" versehenen Zeile 8 angegeben.

Exemplarisch ist das Sensorsystem 7 derart ausgebildet, dass bei einem erstmaligen Speichern eines bestimmten Messwerts im Speicher des Mikrocontrollers 22 noch kein Positionssignal an die Eingabeeinheit 5 weitergeleitet wird. Vielmehr ist vorgesehen, erst dann ein Positionssignal auszugeben, wenn die vom Sensorsystem 7 ermittelte Arbeitsposition in einem weiteren Messzyklus bestätigt wurde.

Dieser weitere Messzyklus ist exemplarisch in der Wertetabelle der Figur 5 dargestellt und ist den Arbeitstakten 81 bis 95 zugeordnet. Auch hier wird nach 10-maligem ununterbrochenen Anliegen des Steuersignals am Zeitglied ein Triggersignal vom Zeitglied an die Auswerteeinrichtung ausgegeben, wobei die Auswerteeinrichtung einen Vergleich des im ersten Speicher abgespeicherten und auf den vorausgegangenen Messzyklus gemäß den Arbeitstakten 43 bis 52 zurückgehenden Messwerts mit dem im Wiederholungsspeicher abgelegten aktuellen Messwert vornimmt. Sofern der Vergleich der beiden Messwerte ergibt, dass diese einem vorgebbaren Kriterium genügen, beispielsweise gemäß den hier rein exemplarisch gewählten Zahlenwerten keine Abweichung größer 0.1 aufweisen, kann von der Auswerteeinrichtung die Ausgabe eines Positionssignals vorgenommen werden, was in der zehnten Zeile durch das "X" im Arbeitstakt 93 repräsentiert wird. Das Positionssignal kann exemplarisch ein logisches Schaltsignal mit einem High-Pegel "1" sein und/oder den Zahlenwert des an der ermittelten Arbeitsposition gemessenen Messwerts umfassen.

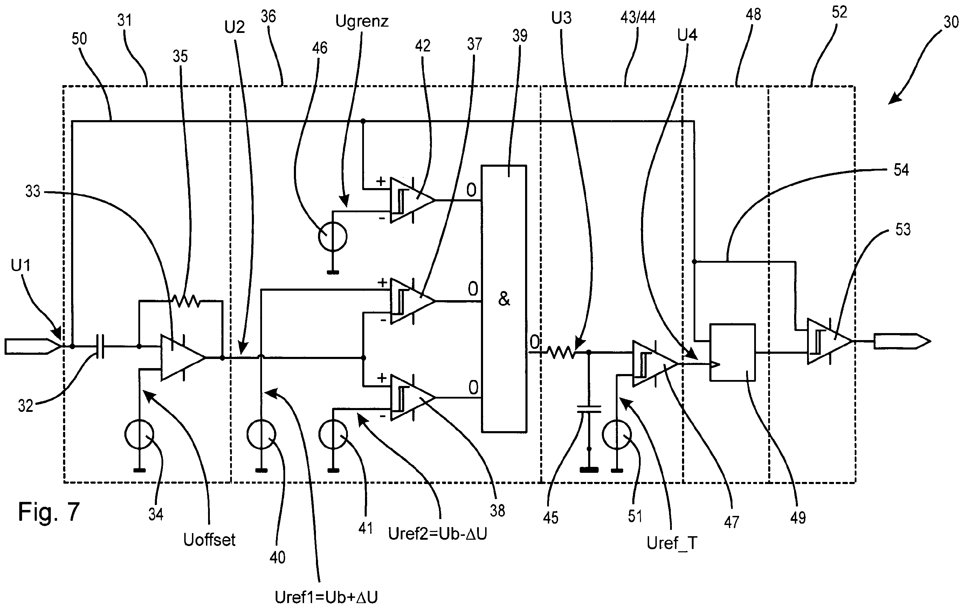

Bei einer alternativen Ausführungsform des Sensorsystems, insbesondere bei der in Figur 7 beschriebenen analogen Auswerteeinrichtung, wird bereits bei erstmaligem Vorliegen des Triggersignals eine Übertragung des Positionssignals an die Eingabeeinheit vorgenommen.

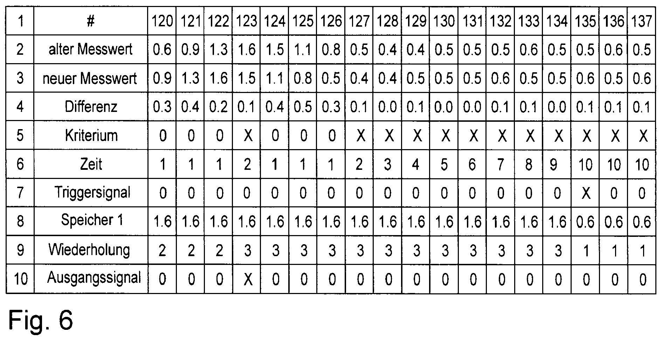

Ein weiterer Messzyklus ist exemplarisch in der Wertetabelle der Figur 6 dargestellt und ist den Arbeitstakten 120 bis 137 zugeordnet. Da der Wiederholungsspeicher in der Zeile 9 der Tabelle gemäß Figur 5 bereits auf dem Wert 2 steht, kann bei Auftreten eines neuen Messwerts, der innerhalb eines nicht dargestellten Intervalls um den gespeicherten Messwert herum liegt, ein Ausgangssignal ausgegeben werden, wie dies exemplarisch in den Spalten 122 und 123 der Fall ist.

Da sich der neue Messwert danach wieder ändert, ist ab der Spalte 124 zunächst die Ausgabe des Ausgangssignals wieder beendet.

Ab der Spalte 127 wird die vorgegebene Maximaldifferenz von 0,1 zwischen dem alten und dem neuen Messwert auf einem vom bisher im Speicher 1 gespeicherten Messwert abweichenden Niveau unterschritten, so dass ebenfalls ab Spalte 127 die Erfüllung des Kriteriums angegeben ist und die Zeit zu laufen beginnt. Da das Kriterium in 10 aufeinanderfolgenden Zeitabschnitten stets erfüllt ist, wird in Spalte 134 das Triggersignal, wie in Zeile 7 angegeben, bereitgestellt. Dadurch wird in den Speicher 1 der neue Messwert gespeichert, ferner wird der Wiederholungsspeicher, wie in Zeile 9 der Tabelle in Figur 5 angegeben, auf den Wert 1 zurückgesetzt, da der neu gespeicherte Messwert zunächst noch bestätigt werden muss, bevor eine Ausgabe des neu gespeicherten Messwerts und/oder eine korrespondierenden Schaltsignals erfolgt, was möglicherweise in einem nachfolgenden, nicht dargestellten Messzyklus der Fall ist.

Bei einer Weiterbildung der vorstehend angeführten Ausführungsformen ist vorgesehen, dass eine Speicherung einer neuen Arbeitsposition nur dann erfolgen kann, wenn hierzu am Sensorsystem ein Freigabesignal anliegt oder ein Sperrsignal zeitweilig unterbrochen ist. Hierdurch wird vermieden, dass beispielsweise in einem Fehlerfall oder während Wartungs- oder Reparaturarbeiten, in denen das Messobjekt in eine neue Position längs der Bewegungsachse gebracht wird, ein oder mehrere neue Arbeitspositionen eingelernt werden.

Ergänzend oder alternativ kann vorgesehen sein, dass das Sensorsystem eine Meldung ausgibt, sofern sich durch Verwendung der vorstehend angeführten Vorgehensweisen eine Verlagerung einer bereits ermittelten Arbeitsposition innerhalb eines vorgebbaren Betragsbereichs um den gespeicherten Wert des Messwerts der bisherigen Arbeitsposition ergibt. Hierzu kann vorgesehen sein, dass vor der Speicherung einer neuen Arbeitsposition in der Auswerteeinrichtung ein Abgleich mit den gespeicherten Werten der Messwerte der bereits ermittelten Arbeitspositionen vorgenommen wird und dass eine Information an einen Benutzer ausgegeben wird, wenn die neue Arbeitsposition innerhalb des vorgegebenen Betragsbereichs um die bestehende Arbeitsposition herum liegt. Dies kann beispielsweise aufgrund mechanischer Veränderungen im Automatisierungssystem der Fall sein, wobei hier das Automatisierungssystem durch den Benutzer überprüft werden kann. Gegebenenfalls kann vorgesehen sein, den neuen Arbeitspunkt nach Freigabe durch einen Benutzer für die weitere Verwendung zu speichern oder nach Durchführung von Wartungs- oder Reparaturarbeiten den neuen Arbeitspunkt zu verwerfen. Alternativ kann vorgesehen werden, die neue Arbeitsposition zu verwenden und eine Speicherung der alten Arbeitsposition vorzunehmen, um anhand der Anzahl der veränderten Arbeitspositionen beispielsweise einen Rückschluss über die Beanspruchung des Automatisierungssystems ziehen zu können.

Bei der in Figur 7 dargestellten analogen Auswerteschaltung 30 ist eine analoge Verarbeitung des oder der Messwerte vorgesehen. Dies ist insbesondere dann von Vorteil, wenn die Auswerteschaltung als individuell gestaltete Halbleiterschaltung auf einem Halbleitersubstrat ausgebildet werden soll (anwendungsspezifische integrierte Schaltung - ASIC - Application Specific Integrated Circuit), da ein Flächenbedarf einer derartigen analogen Auswerteschaltung geringer ist als ein Flächenbedarf einer entsprechenden digitalen Auswerteschaltung.

Bei dem in der Figur 7 dargestellten exemplarischen Ausführungsbeispiel ist eine Unterteilung der analogen Auswerteschaltung 30 in mehrere Blöcke vorgesehen, um die einzelnen Funktionen besser darstellen und beschreiben zu können. Bei einer nicht dargestellten, realen analogen Auswerteschaltung kann eine andere, insbesondere kompaktere Anordnung der nachstehend näher beschriebenen Bestandteile der Auswerteschaltung 30 vorgesehen sein.

An einem ersten Block 31 der analogen Auswerteschaltung 30 wird eine dem ermittelten Messwert entsprechende Eingangsspannung U1 angelegt, die beispielsweise von dem in der Figur 1 dargestellten Magnetfeldsensor 21 bereitgestellt werden kann.

Der erste Block 31 beinhaltet einen Differenzierer, der eine Ableitung der Eingangsspannung U1 nach der Zeit vornimmt. Somit wird aus der Eingangsspannung U1, die beispielsweise eine Position eines Ringmagneten 16 längs einer Bewegungsachse repräsentiert, eine elektrische Ausgangsspannung U2, die proportional zur Geschwindigkeit des Ringmagneten 16 ist. Für die Differenzierung wird die Eingangsspannung U1 zunächst an einen ersten Anschluss eines Kondensators 32 angelegt, dessen zweiter Anschluss mit einem ersten Eingang eines Operationsverstärkers 33 verbunden ist. An einem zweiten Eingang des Operationsverstärkers wird eine Referenzspannung Uoffset angelegt, die von einer ersten Referenzspannungsquelle 34 bereitgestellt wird. Ferner ist zwischen dem ersten Eingang des Operationsverstärkers 33 und dessen Ausgangsanschluss ein Widerstand 35 geschaltet, der für eine Pegelanpassung der Ausgangsspannung U2 sowie für eine Anpassung des zeitlichen Verhaltens des Differenziers ausgebildet ist.

Die Ausgangsspannung U2 des Operationsverstärkers 33 wird an einen zweiten Block 36 bereitgestellt, der drei Vergleicher 37, 38, 42 und eine Logikschaltung 39 umfasst. Die beiden Vergleicher 37, 38 sind exemplarisch jeweils als Operationsverstärker ausgebildet, an denen jeweils an einem ersten Eingang die Ausgangsspannung U2 des Operationsverstärkers 33 angelegt wird. An einem zweiten Eingang des Vergleichers 37 ist eine zweite Referenzspannungsquelle 40 mit einer um den Betrag ΔU gegenüber einer Basisspannung Ub erhöhten Referenzspannung Uref1 angeschlossen. An einem zweiten Eingang des Vergleichers 38 ist eine dritte Referenzspannungsquelle 41 mit einer um den Betrag ΔU gegenüber einer Basisspannung Ub reduzierten Referenzspannung Uref2 angeschlossen. An einem Ausgangsanschluss des Vergleichers 37 wird nur dann ein Ausgangsignal bereitgestellt, wenn die in den Vergleicher 37 eingespeiste Ausgangsspannung U2 kleiner als die Referenzspannung Uref1 ist. An einem Ausgangsanschluss des Vergleichers 38 wird nur dann ein Ausgangsignal bereitgestellt, wenn die in den Vergleicher 38 eingespeiste Ausgangsspannung U2 größer als die Referenzspannung Uref2 ist.

Dementsprechend bestimmen die Referenzspannung Uref1 und die Referenzspannung Uref2 die Grenzen eines Spannungsintervalls, innerhalb dessen von beiden Vergleichern 37 und 38 jeweils Ausgangssignale als logische Pegel 1 ausgegeben werden, sofern die eingespeiste Ausgangsspannung U2 innerhalb dieses Spannungsintervalls liegt.

Dies ist der Fall, wenn in dem betrachteten zeitlichen Intervall keine Änderung der Eingangsspannung U1 eingetreten war und somit exemplarisch der Ringmagnet 16 gegenüber dem Magnetfeldsensor 21 die Geschwindigkeit Null aufweist.

Um sicherzustellen, dass die Eingangsspannung U1 einen vorgebbaren Mindestspannungspegel aufweist und somit auf einem plausiblen Messergebnis beruht, ist der dritte Vergleicher 42 vorgesehen. Ein erster Eingang dieses Vergleichers 42 ist über eine Messleitung 50 mit der Eingangsspannung U1 gekoppelt. Ein zweiter Eingang des Vergleichers 42 ist mit einer vierten Referenzspannungsquelle 46 verbunden, die eine Referenzspannung Ugrenz bereitstellt, die von der Eingangsspannung U1 überschritten werden muss, damit der Vergleicher 42 ein Ausgangssignal an die Logikschaltung 39 ausgibt.

Dementsprechend wird von der als UND-Glied ausgebildeten Logikschaltung 39 nur dann ein von Null unterschiedlicher Spannungspegel als Logikspannung U3 ausgegeben, wenn von den drei Vergleichern 37, 38 und 42 jeweils auf einem logischen Pegel 1 liegende Ausgangssignale ausgegeben werden.

In einem dritten Block 43 ist ein exemplarisch als Kondensator 45 ausgebildetes Zeitglied 44 vorgesehen. Der Kondensator 45 wird von der Logiksspannung U3 geladen. Sobald der Kondensator 45 so weit aufgeladen ist, dass eine Kondensator-Ladespannung U4 einen durch eine fünfte Referenzspannungsquelle 51 vorgegebenen Referenzspannungswert Uref_T überschreitet wird über den Vergleicher 47, der die Kondensator-Ladespannung U4 mit dem Referenzspannungswert Uref_T vergleicht, ein Triggersignal an den vierten Block 48 weitergegeben.

Im vierten Block 48 ist ein analoger Speicher 49 angeordnet, der bei Eintreffen eines Triggersignals den an einer Messleitung 50 anliegenden Spannungspegel speichert. Da die Messleitung 50 direkt mit der Eingangsspannung U1 gekoppelt ist, wird dementsprechend die Eingangsspannung U1 gespeichert. Der analoge Speicher 49 ist dazu ausgebildet, den gespeicherten Spannungspegel als Speicherspannung U5 an den fünften Block 52 auszugeben, der einen weiteren Vergleicher 53 beinhaltet. Der Vergleicher 53 ist mit einem ersten Eingang über eine Referenzleitung 54 mit der Messleitung 50 verbunden. Mit einem zweiten Eingang ist der Vergleicher 53 mit dem analogen Speicher 49 verbunden. Der Vergleicher 53 gibt ein Ausgangssignal aus, sofern die Speicherspannung U5 und die Eingangsspannung U1 beide in einem vorgebbaren Intervall liegen. Dieses Ausgangssignal kann dann beispielsweise an eine nicht dargestellte Steuerungseinrichtung bereitgestellt werden, um zu dokumentieren, dass der Ringmagnet 16 gegenüber dem Magnetfeldsensor 21 eine durch den vorstehend angeführten Speichervorgang ermittelte Position einnimmt.

Vorzugsweise ist vorgesehen, dass der Kondensator 45 aktiv entladen wird, sobald das Logiksignal U3 gegen Null geht oder Null ist.

## Patentansprüche

1. Sensorsystem zur Ermittlung einer Position eines Messobjekts (8) relativ zu einem Sensor (7), mit einem Sensor (7) zur Bereitstellung eines Messwerts, der von einem Abstand zwischen Sensor (7) und einem Messobjekt (8) abhängt, mit einer Auswerteeinrichtung (22; 30) zur Auswertung des Messwerts und zur Bereitstellung eines Auswertungsergebnisses, **dadurch gekennzeichnet, dass** die Auswerteeinrichtung (22; 30) eine Vergleichseinrichtung (31, 36) und ein Zeitglied (44) umfasst, dass die Vergleichseinrichtung (31, 36) für einen Vergleich eines gespeicherten Messwerts mit einem aktuell ermittelten Messwert ausgebildet ist, dass die Vergleichseinrichtung (31, 36) ausgebildet ist, dem Zeitglied (44) ein Steuersignal bereitzustellen, wenn ein Ergebnis des Vergleichs einem vorgebbaren Kriterium genügt, dass das Zeitglied (44) derart ausgebildet ist, dass bei der Bereitstellung des Steuersignals ein Zeitmessvorgang weitergeführt wird und dass bei einem Ausbleiben des Steuersignals der Zeitmessvorgang erneut gestartet wird, dass das Zeitglied (44) derart ausgebildet ist, dass bei Erreichen einer vorgebbaren Zeitspanne des Zeitmessvorgangs ein Triggersignal vom Zeitglied (44) ausgegeben wird und dass die Auswerteeinrichtung (22; 30) eine Speichereinrichtung (49) umfasst, die zur Speicherung des aktuellen Messwerts bei Eintreffen des Triggersignals eingerichtet ist.

2. Sensorsystem nach Anspruch 1, **dadurch gekennzeichnet, dass** die Vergleichseinrichtung (31, 36) für die Speicherung genau eines, insbesondere eines zuletzt ermittelten, Messwerts eingerichtet ist.

3. Sensorsystem nach Anspruch 1 oder 2, **dadurch gekennzeichnet, dass** die Speichereinrichtung (49) zur Speicherung mehrerer Messwerte unterschiedlicher Arbeitspositionen ausgebildet ist.

4. Sensorsystem nach Anspruch 1, 2 oder 3, **dadurch gekennzeichnet, dass** die Auswerteeinrichtung (22; 30) ausgebildet ist, ein Positionssignal auszugeben, wenn ein aktuell ermittelter Messwert mit einem in der Speichereinrichtung (49) gespeicherten Messwert zumindest nahezu übereinstimmt.

5. Sensorsystem nach Anspruch 4, **dadurch gekennzeichnet, dass** die Auswerteeinrichtung (22; 30) derart eingerichtet ist, dass eine Ausgabe des Positionssignals erst vorgenommen wird, wenn ein in der Speichereinrichtung (49) gespeicherter Messwert zumindest einmal durch Vorliegen eines Triggersignals bei zumindest nahezu gleichem Messwert bestätigt wurde.

6. Verfahren zur automatisierten Festlegung eines Schaltpunkts für ein Sensorsystem (7), das einen Messwert in Abhängigkeit von einem Abstand zwischen einem Sensor (7) und einem Messobjekt (8) ausgibt, mit den wiederkehrenden Schritten: Ermitteln eines ersten Messwerts zu einem ersten Zeitpunkt und Speichern des ersten Messwerts in einer Vergleichseinrichtung, Ermitteln eines zweiten Messwerts zu einem zweiten Zeitpunkt und Vergleichen des zweiten Messwerts mit dem ersten Messwert, Bereitstellen eines Steuersignals an ein Zeitglied (44) nur für den Fall, dass ein Ergebnis des Vergleichs der beiden Messwerte einem vorgebbaren Kriterium genügt, Weiterführen eines Zeitmessvorgangs durch das Zeitglied (44) bei Bereitstellung des Steuersignals, Neustart des Zeitmessvorgangs durch das Zeitglied (44) bei Ausbleiben des Steuersignals, Ausgeben eines Triggersignals vom Zeitglied (44) an die Speichereinrichtung (49) bei Erreichen einer vorgebbaren Zeitspanne des Zeitmessvorgangs, Speichern des aktuellen Messwerts in einer Speichereinrichtung der Auswerteeinrichtung (22; 30) bei Eintreffen des Triggersignals.

7. Verfahren nach Anspruch 6 **dadurch gekennzeichnet, dass** für den Vergleich des ersten Messwerts mit dem zweiten Messwert eine Zwischenspeicherung des ersten Messwerts, vorzugsweise eine ausschließliche Zwischenspeicherung des ersten Messwerts, vorgenommen wird.

8. Verfahren nach Anspruch 6 oder 7 **dadurch gekennzeichnet, dass** die Auswerteeinrichtung (22; 30) ein Positionssignal ausgibt, wenn ein aktuell ermittelter Messwert zumindest nahezu mit einem in der Speichereinrichtung (49) gespeicherten Messwert übereinstimmt.

9. Verfahren nach Anspruch 8 **dadurch gekennzeichnet, dass** eine Ausgabe des Positionssignals erst vorgenommen wird, wenn ein in der Speichereinrichtung (49) gespeicherter Messwert zumindest einmal durch Vorliegen eines Triggersignals bei zumindest nahezu gleichem Messwert bestätigt wurde.

10. Verfahren nach Anspruch 7, 8 oder 9, **dadurch gekennzeichnet, dass** ein Erfassungsbereich für den Messwert vorgegeben wird, in dem das vorgebbare Kriterium erfüllt werden kann, wobei eine Neubestimmung eines Schaltpunkts nur innerhalb des Erfassungsbereichs erfolgt.

## Claims

1. Sensor system for determining a position of a measured object (8) relative to a sensor (7), with a sensor (7) for the provision of a measured value, which depends on a distance between a sensor (7) and a measured object (8), with an evaluation device (22; 30) for evaluation of the measured value and for provision of a measured value result, **characterised in that** the evaluation device (22; 30) includes a comparing device (31, 36) and a timer (44), that the comparing device (31, 36) is designed for comparison of a stored measured value with a currently determined measured value, that the comparing device (31, 36) is designed to provide the timer (44) with a control signal when a result of the comparison satisfies a presettable criterion, that the timer (44) is designed so that, on provision of the control signal, a timed measuring process is continued and that, in the absence of the control signal the timed measuring process is restarted, that the timer (44) is so designed that, on reaching a presettable duration of the timed measuring process a trigger signal is output by the timer (44), and that the evaluation device (22; 30) includes a memory device (49) which is set up for storage of the current measured value on receipt of the trigger signal.

2. Sensor system according to claim 1, **characterised in that** the comparing device (31, 36) is set up for the storage of precisely one measured value, in particular the last determined measured value.

3. Sensor system according to claim 1 or 2, **characterised in that** the memory device (49) is designed for the storage of several measured values of different operating positions.

4. Sensor system according to claim 1, 2 or 3, **characterised in that** the evaluation device (22; 30) is designed to output a position signal when a currently determined measured value coincides, at least approximately, with a measured value stored in the memory device (49).

5. Sensor system according to claim 4, **characterised in that** the evaluation device (22; 30) is so set up that output of the position signal takes place only when a measured value stored in the memory device (49) has been confirmed at least once by the presence of a trigger signal for at least approximately the same measured value.

6. Method for the automated determination of a switching point for a sensor system (7) which outputs a measured value based on a distance between a sensor (7) and a measured object (8), with the recurring steps: determination of a first measured value at a first point in time and storage of the first measured value in a comparing device; determination of a second measured value at a second point in time and comparison of the second measured value with the first measured value, provision of a control signal to a timer (44) only when a result of the comparison of the two measured values satisfies a presettable criterion, continuation of a timed measuring process by the timer (44) on provision of the control signal, restarting of the timed measuring process by the timer (44) in the absence of the control signal, output of a trigger signal by the timer (44) to the memory device (49) on reaching a presettable duration of the timed measuring process, storage of the current measured value in a memory device of the evaluation device (22; 30) on receipt of the trigger signal.

7. Method according to claim 6 **characterised in that**, for the comparison of the first measured value with the second measured value, an intermediate memory of the first measured value, preferably an exclusive intermediate memory of the first measured value, is made.

8. Method according to claim 6 or 7, **characterised in that** the evaluation device (22; 30) outputs a position signal when a currently determined measured value coincides at least approximately with a measured value held in the memory device (49).

9. Method according to claim 8, **characterised in that** an output of the position signal is made only if a measured value stored in the memory device (49) has been confirmed at least once by the presence of a trigger signal for at least approximately the same measured value.

10. Method according to claim 7, 8 or 9, **characterised in that** a detection range for the measured value is preset, in which the presettable criterion may be satisfied, wherein a redetermination of a switching point is made only within the detection range.

## Revendications

1. Système de capteur servant à déterminer une position d'un objet de mesure (8) par rapport à un capteur (7), comprenant un capteur (7) servant à fournir une valeur de mesure, qui dépend d'une distance entre le capteur (7) et un objet de mesure (8), comprenant un dispositif d'évaluation (22 ; 30) servant à évaluer la valeur de mesure et servant à fournir un résultat d'évaluation, **caractérisé en ce que** le dispositif d'évaluation (22 ; 30) comprend un dispositif de comparaison (31, 36) et un organe de temps (44), que le dispositif de comparaison (31, 36) est réalisé en vue d'une comparaison entre une valeur de mesure mémorisée et une valeur de mesure déterminée de manière instantanée, que le dispositif de comparaison (31, 36) est réalisé pour fournir un signal de commande à l'organe de temps (44) quand un résultat de la comparaison répond à un critère pouvant être spécifié, que l'organe de temporisation (44) est réalisé de telle manière qu'une opération de chronométrage se poursuit quand le signal de commande est fourni, et que l'opération de chronométrage est lancée à nouveau lorsque le signal de commande est absent, que l'organe de temporisation (44) est réalisé de telle manière qu'un signal de déclenchement est émis par l'organe de temporisation (44) quand un laps de temps pouvant être spécifié de l'opération de chronométrage est atteint,
et que le dispositif d'évaluation (22 ; 30) comprend un dispositif de mémoire (49), qui est agencé afin de mémoriser la valeur de mesure instantanée à réception du signal de déclenchement.

2. Système de capteur selon la revendication 1, **caractérisé en ce que** le dispositif de comparaison (31, 36) est agencé en vue de la mémorisation précisément d'une valeur de mesure, en particulier déterminée en dernier lieu.

3. Système de capteur selon la revendication 1 ou 2, **caractérisé en ce que** le dispositif de mémoire (49) est réalisé afin de mémoriser plusieurs valeurs de mesure de différentes positions de travail.

4. Système de mesure selon la revendication 1, 2 ou 3, **caractérisé en ce que** le dispositif d'évaluation (22 ; 30) est réalisé pour émettre un signal de position quand une valeur de mesure déterminée de manière instantanée coïncide au moins quasiment avec une valeur de mesure mémorisée dans le dispositif de mémoire (49).

5. Système de capteur selon la revendication 4, **caractérisé en ce que** le dispositif d'évaluation (22 ; 30) est agencé de telle manière qu'une émission du signal de position est réalisée seulement quand une valeur de mesure mémorisée dans le dispositif de mémoire (49) a été confirmée au moins une fois par la présence d'un signal de déclenchement pour une valeur de mesure au moins quasiment égale.

6. Procédé servant à fixer de manière automatisée un point de commutation pour un système de capteur (7), qui émet une valeur de mesure en fonction d'une distance entre un capteur (7) et un objet de mesure (8), comprenant les étapes récurrentes consistant à :
déterminer une première valeur de mesure à un premier moment et mémoriser la première valeur de mesure dans un dispositif de comparaison, déterminer une deuxième valeur de mesure à un deuxième moment et comparer la deuxième valeur de mesure à la première valeur de mesure, fournir un signal de commande à un organe de temporisation (44) seulement si un résultat de la comparaison des deux valeurs de mesure répond à un critère pouvant être spécifié, poursuivre une opération de chronométrage par l'organe de temporisation (44) lorsque le signal de commande est fourni, lancer à nouveau l'opération de chronométrage par l'organe de temporisation (44) en l'absence du signal de commande, émettre un signal de déclenchement par l'organe de temporisation (44) à l'attention du dispositif de mémoire (49) lorsqu'un laps de temps de l'opération de chronométrage pouvant être spécifié est atteint, mémoriser la valeur de mesure instantanée dans un dispositif de mémoire du dispositif d'évaluation (22 ; 30) à réception du signal de déclenchement.

7. Procédé selon la revendication 6, **caractérisé en ce qu'**une mémorisation temporaire de la première valeur de mesure, de préférence une mémorisation temporaire exclusive de la première valeur de mesure, est réalisée en vue de la comparaison de la première valeur de mesure à la deuxième valeur de mesure.

8. Procédé selon la revendication 6 ou 7, **caractérisé en ce que** le dispositif d'évaluation (22 ; 30) émet un signal de position, quand une valeur de mesure déterminée de manière instantanée coïncide au moins quasiment avec une valeur de mesure mémorisée dans le dispositif de mémoire (49).

9. Procédé selon la revendication 8, **caractérisé en ce qu'**une émission du signal de position est réalisée seulement quand une valeur de mesure mémorisée dans le dispositif de mémoire (49) a été confirmée au moins une fois par la présence d'un signal de déclenchement pour une valeur de mesure au moins quasiment identique.

10. Procédé selon la revendication 7, 8 ou 9, **caractérisé en ce qu'**une zone de détection est spécifiée pour la valeur de mesure, dans laquelle le critère pouvant être spécifié peut être rempli, dans lequel une nouvelle définition d'un point de commutation a lieu seulement au sein de la zone de détection.
